# EUROPEAN PATENT APPLICATION

(11) **EP 2 482 518 A1**
(43) Date of publication of application: **01.08.2012**
(21) Application number: 12150954.1
(22) Date of filing: 12.01.2012
(51) Int. Cl.: H04L 29/06

(54) **Method and apparatus for specifying a user's preferred spoken language for network communication services**

(30) Priority: 01.02.2011 US 201113019104
(71) Applicant: Telefonaktiebolaget L M Ericsson (Publ), 164 83 Stockholm (SE)
(72) Inventor: Balla, László, 2013 Pomáz (HU); Olsson, John, 13231 SALTSJÖ-BOO (SE); Nordin, Hans, 14652 TULLINGE (SE)
(74) Representative: Ström & Gulliksson AB

(57) **Abstract**

A new telecommunication service provides users with the ability to specify and receive spoken-language services in a preferred language that differs from a preferred written or text language for use with the SIP Protocol. One or more user (e.g., a subscribing entity) preferences for spoken language as well as written language is specified and stored, e.g., in a subscriber database. An application server uses the configured spoken language preference(s) to select the language used for voice announcements, voice prompts, and other voice applications provided in one or more telecommunication services. For example, the server populates the existing SIP Accept-Language header and/or a new SIP P-Media-Language field with the spoken language preference(s) to allow the other servers, e.g., in a home and destination domain, to provide spoken/voice service as well as text-based service to the user according to the user's differing language preference(s) in written or spoken word.

## Description

### TECHNICAL FIELD

The technical field relates to communication networks, and more particularly, to methods and apparatus advantageous for use in an IP Multimedia Subsystem (IMS).

### BACKGROUND

The IP Multimedia Subsystem (IMS) is an architectural framework for delivering Internet Protocol (IP) multimedia services. It was originally designed by the wireless standards body 3rd Generation Partnership Project (3GPP), as a part of the vision for evolving mobile networks beyond GSM. IMS uses IETF protocols wherever possible, and in particular, Session Initiation Protocol (SIP). In general, IMS aids the access of multimedia and voice applications from wireless and wireline terminals

Media servers like a media resource function processor (MRFP) node in 3GPP can support voice announcement or voice prompt sending in different languages (see, e.g., H.248.7 or H.248.9 specifications). Nevertheless, most existing phones today are not capable of communicating the user's spoken language preferences to the network. In systems like IMS that use SIP, the SIP Accept-Language header as, specified by RFC 3261, section 20.3, limits its use to "indicate the preferred languages for reason phrases, session descriptions, or status responses carried as message bodies in the response." In other words, RFC 3261 limits the SIP Accept-Language header to selecting a preferred language for text-based or written information. There is no provision for a user to select a spoken language preference. The apparent assumption is that the user's preferred written language for text message bodies (e.g., HTTP pages) should be the same for the user's preferred spoken language. But this is assumption is not always correct.

For example, a user may be more comfortable or more adept in oral or spoken communications in a first language even though that user is willing to communicate for written or text communications in a second language. Another issue is that the Accept-Language header in particular can reveal information the user would consider to be of a private nature, e.g., a concern that the fact that the user may understand a particular language may be assumed by others as an indicator that the user is a member of a particular ethnic group. This lack of flexibility to meet spleen language preferences is an unsolved problem. Another unsolved problem includes privacy concerns that may be important to some users with respect to language preference. RFC 3323 does not address any privacy considerations with respect to the Accept-Language header.

### SUMMARY

The technology in this application solves the problems identified in the background and provides the network with the ability to permit a user to select and the network to provide spoken language-based services based on user preferences. The language preferred by the user for spoken language services can be indicated by the user to be different than the language preferred by the user for written language services.

A first aspect of the technology described here includes a method in a communications network server that provides network services to user subscribers. A Session Initiation Protocol (SIP) message is received from a calling user, and in response thereto, a preferred spoken language for the calling user is determined that is different than a preferred written language for the calling user. A spoken language service is later initiated that uses the preferred spoken language.

In one example embodiment, the preferred spoken language for the user is determined by checking stored user data associated with the calling user.

In another example embodiment, the preferred spoken language for the user is determined from content of a field of the received SIP message. For example, the SIP message may be an INVITE message and the field comprises an existing Accept-Language field. Alternatively, the SIP field comprises a new P-Media-Language field.

The spoken language service can be a voice announcement which is provided using the preferred spoken language for the calling user that is different than a preferred written language for the calling user.

In a detailed example, the network server is an originating application server (AS). Another SIP message that includes an Accept-Language field and/or a P-Media-Language field having the preferred spoken language for the calling user which is(are) used by a Call Session Control Function (CSCF) to process SIP signaling packets in an IP Multimedia Subsystem (IMS) for forwarding to a terminating domain in the IMS. The CSCF server may also forward the SIP message with an Accept-Language field and/or a P-Media-Language field having the preferred spoken language for the calling user to a called user.

In another embodiment, a user-level privacy request for the preferred spoken language is determined in response to the received message. The received message is then forwarded without an indication of the preferred spoken language for the user. In a specific example, the received SIP message is an INVITE message, the preferred spoken language for the user is determined from content of an Accept-Language field and/or a P-Media-Language field of the INVITE message. In response to the INVITE message, a user-level privacy request is determined for the preferred spoken language from content of the Accept Language field and/or a P-Media-Language field. The received INVITE message is then forwarded without the Accept-Language field and/or a P-Media-Language field.

A second aspect of the technology described here includes an apparatus for use in a communications network server that provides network services to user subscribers. An input and output receive and send Session Initiation Protocol (SIP) messages. Electronic circuitry is configured to: receive from the input a Session Initiation Protocol (SIP) message from a calling user; in response to the received message, determine a preferred spoken language for the calling user that is different than a preferred written language for the calling user; and initiate via the output a spoken language service that uses the preferred spoken language.

A third aspect of the technology described here includes a communications network server that provides network services to user subscribers. An input and output receive and send Session Initiation Protocol (SIP) messages. Electronic circuitry is configured to receive from the input a Session Initiation Protocol (SIP) message from a calling user; in response to the received message, determine a preferred spoken language for the calling user that is different than a preferred written language for the calling user; and initiate via the output a spoken language service that uses the preferred spoken language.

In one example embodiment, the network server is an originating application server (AS), and the electronic circuitry provides another SIP message that includes an Accept-Language field and/or a P-Media-Language field having the preferred spoken language for the calling user to a Call Session Control Function (CSCF) used to process SIP signaling packets in an IP Multimedia Subsystem (IMS) for forwarding to a terminating domain in the IMS.

### BRIEF DESCRIPTION OF THE DRAWINGS

Figure 1 is a non-limiting example function block diagram of a more general communications system that provides spoken language-based services to users in accordance with user preferences;

Figure 2 is a flowchart diagram of non-limiting example procedures for providing user-preference, spoken-language-based services to users in accordance with a first example embodiment;

Figure 3 is a flowchart diagram of non-limiting example procedures for providing user-preference, spoken-language-based services to users in accordance with a second example embodiment;

Figure 4 is a non-limiting example function block diagram of an application server that may be used for example in either of the systems shown in Figures 1 and 2 for implementing the procedures outlined in Figures 3 and 4;

Figure 5 illustrates a non-limiting example of a specific, IMS-based communications system;

Figure 6 illustrates a non-limiting example signaling diagram implemented in a SIP-based system like that of Figure 5 in accordance with a third non-limiting, example embodiment;

Figure 7 illustrates a non-limiting example signaling diagram implemented in a SIP-based system like that of Figure 5 in accordance with a variation of the third example embodiment; and

Figure 8 illustrates a non-limiting example signaling diagram implemented in a SIP-based system like that of Figure 5 in accordance with a fourth non-limiting, example embodiment.

### DETAILED DESCRIPTION

In the following description, for purposes of explanation and not limitation, specific details are set forth, such as particular nodes, functional entities, techniques, protocols, standards, etc. in order to provide an understanding of the described technology. It will be apparent to one skilled in the art that other embodiments may be practiced apart from the specific details disclosed below. In other instances, detailed descriptions of well-known methods, devices, techniques, etc. are omitted so as not to obscure the description with unnecessary detail. Individual function blocks are shown in the figures. Those skilled in the art will appreciate that the functions of those blocks may be implemented using individual hardware circuits, using software programs and data in conjunction with a suitably programmed microprocessor or general purpose computer, using applications specific integrated circuitry (ASIC), and/or using one or more digital signal processors (DSPs). The software program instructions and data may be stored on computer-readable storage medium, and when the instructions are executed by a computer or other suitable processor control, the computer or processor performs the functions.

Thus, for example, it will be appreciated by those skilled in the art that diagrams herein can represent conceptual views of illustrative circuitry or other functional units. Similarly, it will be appreciated that any flow charts, state transition diagrams, pseudocode, and the like represent various processes which may be substantially represented in computer readable medium and so executed by a computer or processor, whether or not such computer or processor is explicitly shown.

The functions of the various illustrated elements may be provided through the use of hardware such as circuit hardware and/or hardware capable of executing software in the form of coded instructions stored on computer-readable medium. Thus, such functions and illustrated functional blocks are to be understood as being either hardware-implemented and/or computer-implemented, and thus machine-implemented.

In terms of hardware implementation, the functional blocks may include or encompass, without limitation, digital signal processor (DSP) hardware, reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors or one or more controllers, and the terms computer, processor, and controller may be employed interchangeably. When provided by a computer, processor, or controller, the functions may be provided by a single dedicated computer or processor or controller, by a single shared computer or processor or controller, or by a plurality of individual computers or processors or controllers, some of which may be shared or distributed. Moreover, the term "processor" or "controller" also refers to other hardware capable of performing such functions and/or executing software, such as the example hardware recited above.

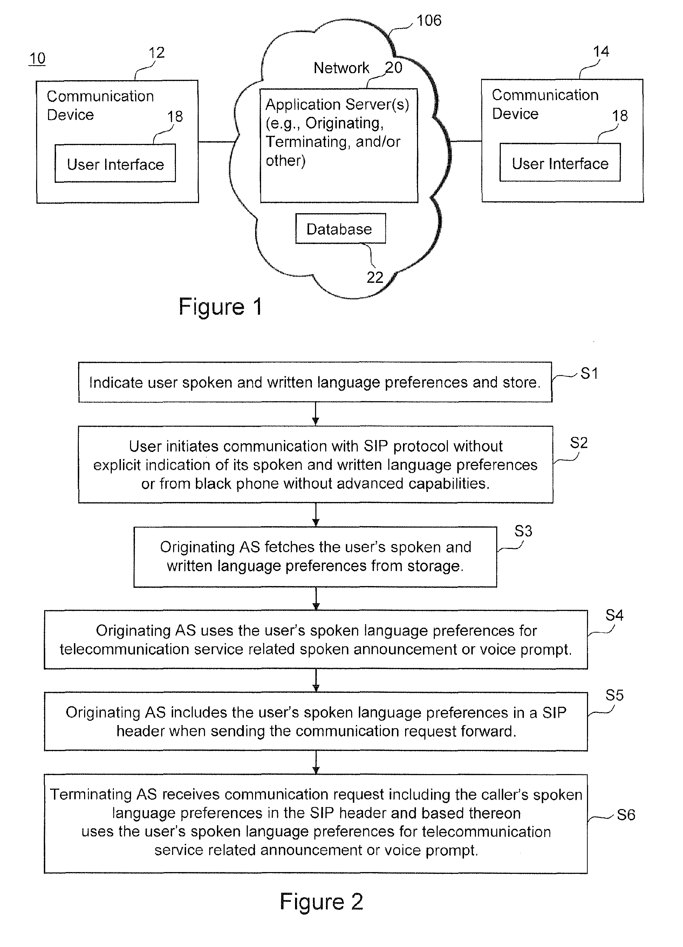

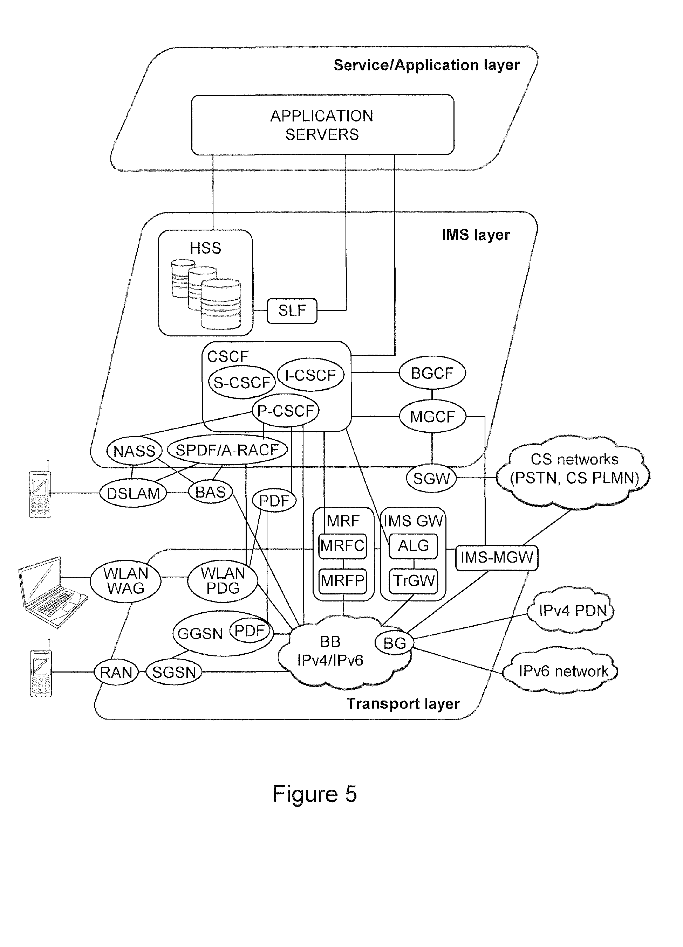

Although the technology described in this application may be used in many different specific types of communication systems, (one example of which is shown in Figure 5), it may be used in any SIP-based communications system that uses SIP to establish and control communications between user devices. For example, Figure 1 shows a general communications system 10 with two or more communication devices 12 and 14 interconnected by at least one communications network 16. Each device 12 and 14 includes a user interface 18 including a display, a text input mechanism, and microphone and speaker for inputting and outputting spoken-language, respectively. Within the network 10, devices 12 and 14 connect to, and are served by, an originating and /or a terminating application server(s) 20 which are preferably coupled to one or more user databases 22.

The Session Initiation Protocol (SIP) is used by the devices 12, 14 and server(s) for setting up and controlling a variety of telecommunications using SIP protocol messages. A SIP message may include an Accept-Language header field that identifies the language that is preferred by the message sender user for reason phrases, session descriptions, or status responses carried as text message bodies in the response. As mentioned in the background, RFC 3261 limits the SIP Accept-Language header to selecting a preferred language for text-based information. The inventors recognized that the assumption that the user's preferred written language for text message bodies (e.g., HTTP pages) should be the same for the user's preferred spoken language was not always correct and unduly limiting. Example situations where this might be the case were identified in the background, but ultimately, there is an unrecognized need to provide users with the ability to specify and receive spoken-language services in a preferred language that differs from a preferred written or text language.

A new telecommunication service is provided that allows users to specify and receive spoken-language services in a preferred language that differs from a preferred written or text language. One or more user (e.g., a subscriber) preferences for spoken language as well as written language is specified and stored, e.g., in a user database. One or more application servers use the configured spoken language preference(s) to select the language and language-variant (e.g., a dialect such as English-GB as opposed to English-US or a completely different language like Mandarin (zh-cmn) and Cantonese (zh-yue)) used for voice announcements, voice prompts, and other voice applications provided in one or more telecommunication services. The server populates a message with the spoken language preference(s) to allow the other servers, e.g., in a home and destination domain, to provide spoken/voice-based as well as text-based messages to the user on the user's language preference(s). Advantageously, the user preference for spoken language may differ from that for written or text language. One non-limiting example of such a message is SIP message in which the existing SIP Accept-Language header is used to indicate the user's preference for written language and spoken language in delivered services, where the two preferences may be the same or different. Another non-limiting example introduces a new P-Media-Language header to a SIP message that indicates the user's preference for written language and spoken language in delivered services, where the two preferences may be the same or different. A benefit of the latter example is that the encoding of the existing Accept-Language header need not be modified. Another aspect of the technology also extends the scope of a SIP Privacy header to the Accept-Language header.

Figure 2 is a flowchart diagram of non-limiting example procedures for providing spoken language-based services to users in accordance with a first example embodiment. In step S1, a calling user indicates the user's language preference(s) including a spoken or voice language preference and preferably also a written or text language preference which may be different. More than one preference for each may be specified. One example way is for the user to indicate the user language preferences to the network operator, and the operator manually configures and stores language preferences, e.g., in a user database or locally in the server. Alternatively, the user may configure language preferences using a web service that allows users to specify a language preference, e.g., the language is configured as an RFC 3066 compliant Language-Tag.

In step S2, the calling user initiates a communication for a called user with an application server using SIP protocol messaging without explicit indication of a spoken language preference and/or from a "black phone" that is not capable of making such a language indication. The application server determines the calling user's spoken and written language preference(s), e.g., an AS fetches language preference(s) from a user database using a user/subscriber identifier included in the initial SIP request message. Alternatively, the server may already have a locally stored copy of this user's language preference(s). In example embodiments, the originating server uses the user's spoken and written language preference(s) included in the existing Accept-Language SIP header and/or a new P-Media-Language SIP header to provide the spoken language-based telecommunication service in that preferred language independently of a written or text-based language preference, e.g., using a media resource server (step S4). Non-limiting, example spoken language-based telecommunication services include a voice announcement or a voice prompt. If a terminating server is used, the originating server also includes the user's spoken and written language preferences, e.g., in the SIP Accept-Language header and/or a P-Media-Language SIP header when sending the communication request forward to that terminating server (step S5). The terminating server receives communication request including the caller's language preferences, e.g., in the SIP Accept-Language header and/or a P-Media-Language header. If the terminating server receives the request in a P-Media-Language header, then the spoken language specified in the P-Media-Language header is used for voice announcement, etc. Otherwise, the spoken language specified in the SIP Accept-Language header is used. Depending on the requested telecommunication service(s), the terminating server may also use the user's language preferences in delivering for example a voice announcement or voice prompt (step S6). Non-limiting examples of originating services include a "credit low" announcement and a "special tariff" announcement, and non-limiting examples of terminating voice services include a "call waiting" indication and a "changed number" announcement.

In response to receiving the INVITE message, the called communication device 110 returns a SIP 180 RINGING message to the application server(s) 104. This 180 RINGING message may identify the preferred spoken and written language preferences of the called entity, e.g., in its Accept-Language header and/or P-Media-Language header, similar to what is described above for the calling entity. The receiving application server(s) process those preferences again as explained above for the calling user.

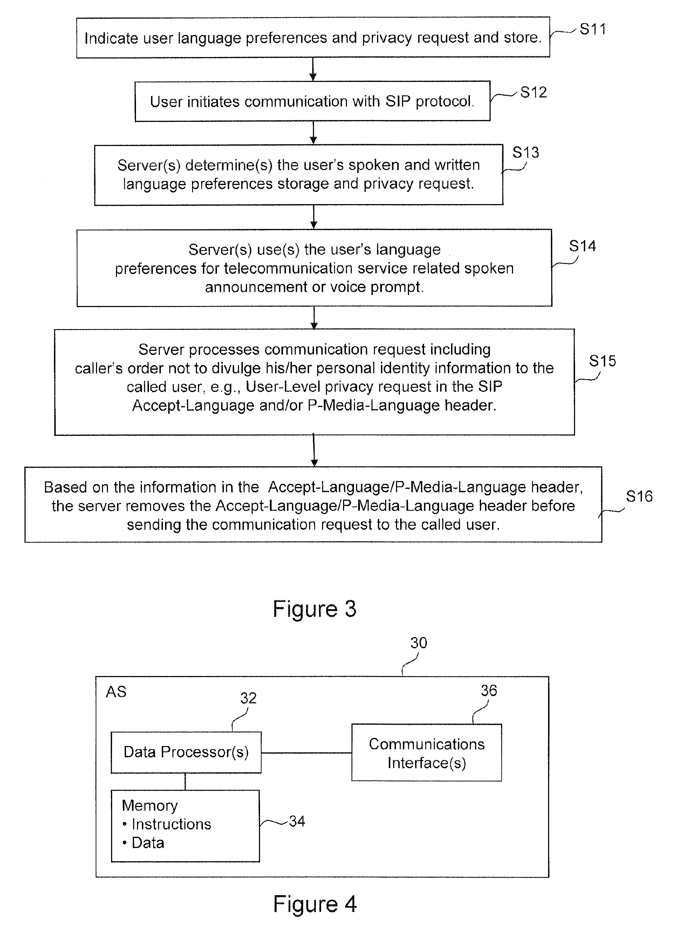

Figure 3 is a flowchart diagram of non-limiting example procedures for providing spoken language-based services to users in accordance with a second example embodiment. In step S11, a calling user indicates the user's language preference(s) including one or more spoken or voice language preferences and preferably also one or more written or text language preferences as well as one or more privacy requests. In step S12, the calling user initiates a communication for a called user with an application server using SIP protocol messaging. Based on that request, the originating server and/or the terminating server determines the user's language preference(s), e.g., the server fetches language preference(s) from the user database using a user/subscriber identifier included in the initial SIP request message. The originating server and/or the terminating server uses the calling user's language preference(s) included in the SIP message to provide a spoken language-based telecommunication service in that preferred language independently of a written or text based language preference (step S14). For example, the user's language preference(s) may be included in the Accept-Language header and/or P-Media-Language header in the SIP message. If a terminating server is used, it receives a communication request including the caller's language preferences in the SIP message and the calling user's request not to divulge his/her personal identity information to the called user, e.g., in the form of a SIP Privacy header with a User-Level privacy request (step S15). If both of the Accept-Language header and P-Media-Language header are used, one or both may be selected for privacy if desired. Based on this information, the terminating server removes the SIP Accept-Language header and/or P-Media-Language header before sending the communication request to the called user (step S16).

In response to receiving the INVITE message, the called communication device 110 returns a SIP 180 RINGING message to the application server(s) 104. This 180 RINGING message may identify the preferred spoken and written language preferences of the called entity in its Accept-Language header and/or P-Media-Language header, similar to what is described above for the calling entity. The receiving application server(s) process those preferences again as explained above for the calling party.

Figure 4 is a non-limiting example function block diagram of an originating and/or terminating application server (AS) 30 that may be used for example in the system shown in Figure 1 for implementing the procedures outlined in Figures 2 and 3. The AS 30 includes one or more data processors 32 for executing program instructions stored in memory 34 used to perform the server tasks described in Figures 2 and 3, among other tasks. The memory 34 may also store data such as the user's spoken and written language preferences as well as privacy requests. The data processor 32 is coupled to one or more communication interfaces 36 for interfacing with other entities/nodes in the network as well as the users. The communication interfaces 36 may also include an interface to a user/subscriber database.

An architectural overview of a non-limiting example of a specific communications system that may employ the technology described above is illustrated in Figure 5. The system includes a service/application layer, an IP Multimedia Core Network Subsystem (IMS) layer, and a transport layer. The blocks represent different functions, linked by standardized interfaces, which grouped form one network. One or more of the functions may be implemented using one or more computer-based nodes. More details regarding this example system may be found in 3GPP TS 23.228 available at the 3GPP organization's web site.

The user can connect to an IMS network in various ways, most of which use the Internet Protocol (IP). IMS terminals (wireless and wired phones, personal digital assistants (PDAs), computers, etc.) can register directly on an IMS network. This is the case even mobile terminals are roaming in another network or country (the visited network). The only requirement is that user terminals can use IP and run Session Initiation Protocol (SIP) user agents. Fixed access (e.g., Digital Subscriber Line (DSL), cable modems, Ethernet), mobile access (e.g. W-CDMA, CDMA2000, GSM, GPRS) and wireless access (e.g. WLAN, WiMAX) and the like are supported. Other systems like plain old telephone service (POTS-the old analogue telephones), H.323, and non IMS-compatible VoIP systems are supported through gateways.

The core network includes a Home Subscriber Server (HSS), or User Profile Server Function (UPSF), which is a master user database that supports the IMS network entities that actually handle calls. It contains user subscription-related information (subscriber profiles), performs authentication and authorization of the user, and can provide information about the subscriber's location and IP information. For the technology in this application, the HSS may also store user preferences such as language and privacy preferences.

Various user identities may be associated with IMS, e.g., IP Multimedia Private Identity (IMPI), IP Multimedia Public Identity (IMPU), Globally Routable User Agent URI (GRUU), Wildcarded Public User Identity. Both IMPI and IMPU are not phone numbers or other series of digits, but Uniform Resource Identifier (URIs), that can be digits (a Tel URI, like tel:+1-555-123-4567) or alphanumeric identifiers (a SIP URI, like sip:john.doe@example.com).

Session Initiation Protocol (SIP) servers or proxies, collectively called Call Session Control Function (CSCF), are used to process SIP signaling packets in the IMS. For example, a Proxy-CSCF (P-CSCF) is a SIP proxy that is the first point of contact for a user terminal. A Serving-CSCF (S-CSCF) is a central SIP server node of the signaling plane that performs session control. It handles SIP registrations, which allows it to bind the user location (e.g., the IP address of the terminal), and the SIP address decides to which application server(s) the SIP message will be forwarded, in order to provide their services. An Interrogating-CSCF (I-CSCF) is another SIP function located at the edge of an administrative domain.

SIP Application servers (AS) host and execute services, such as the IMS voice announcement and if desired user privacy services described below, and interface with the S-CSCF using Session Initiation Protocol (SIP). Depending on the actual service, the AS can operate in SIP proxy mode, SIP UA (user agent) mode or SIP B2BUA mode. An AS can be located in the home network or in an external third-party network. If located in the home network, it can query the HSS with the Diameter Sh or Si interfaces (for a SIP-AS). Public Service Identities (PSI) identify services hosted by Application Servers.

One or more media servers implement a Media Resource Function (MRF) to provide media related functions such as media manipulation (e.g., stream mixing) and playing of tones and announcements. The technology described above permits voice announcements to be played using a spoken language preference of the user. Each MRF is further divided into a Media Resource Function Controller (MRFC) and a Media Resource Function Processor (MRFP). Media Resources are those components that operate on the media plane and are under the control of IMS Core functions. Specifically, Media Server (MS) and Media gateway (MGW).

A PSTN/CS gateway interfaces with PSTN circuit-switched (CS) networks. For signaling, CS networks use ISDN User Part (ISUP) (or BICC) over Message Transfer Part (MTP), while IMS uses Session Initiation Protocol (SIP) over IP. For media, CS networks use pulse-code modulation (PCM), while IMS uses Real-time Transport Protocol (RTP). A Signaling Gateway (SGW) interfaces with the signaling plane of the CS and transforms lower layer protocols as Stream Control Transmission Protocol (SCTP, an Internet Protocol (IP) protocol) into Message Transfer Part (MTP, an Signaling System 7 (SS7) protocol), to pass ISDN User Part (ISUP) from the MGCF to the CS network.

A Media Gateway Controller Function (MGCF) is a SIP endpoint that performs call control protocol conversion between SIP and ISUP/BICC and interfaces with the SGW over SCTP. It also controls the resources in a Media Gateway (MGW) across an H.248interface. A Media Gateway (MGW) interfaces with the media plane of the CS network by converting between RTP and PCM and can also transcode when the codecs do not match.

A Breakout Gateway Control Function (BGCF) is a SIP proxy which processes requests for routing from an S-CSCF when the S-CSCF has determined that the session cannot be routed using DNS or ENUM/DNS. It includes routing functionality based on telephone numbers.

A SIP application may be dynamically and differentially (based on the user's profile) triggered using a filter-and-redirect signaling mechanism in the S-CSCF. The S-CSCF might apply filter criteria to determine the need to forward SIP requests to an AS. Services for the originating party are applied in the originating network, while the services for the terminating party are be applied in the terminating network, all in the respective S-CSCFs. Initial Filter Criteria (iFC) are filter criteria that are stored in the HSS as part of the IMS Subscription Profile and are downloaded to the S-CSCF upon user registration (for registered users) or on processing demand (for services, acting as unregistered users).

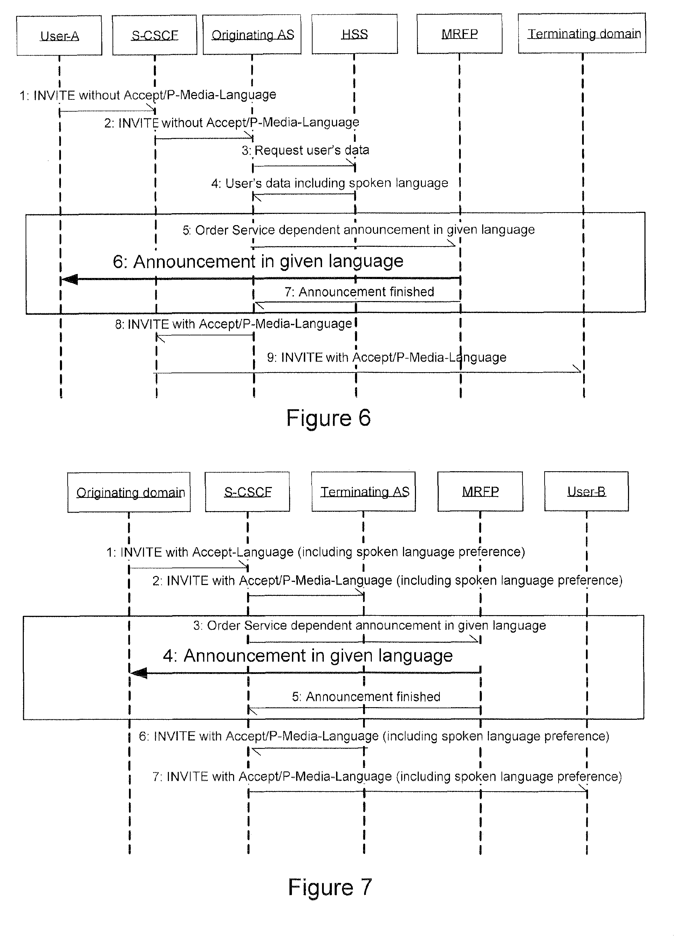

Figure 6 illustrates a non-limiting example signaling diagram implemented in a SIP-based system like that of Figure 5 in accordance with a third example embodiment. The calling user A sends a SIP INVITE message without an Accept-Language header and/or P-Media-Language header to the S-CSCF (1) which forwards it to the originating AS (2). The originating AS identifies the user from the INVITE message and looks up the user's language preferences in the HSS (3&4). The originating AS orders a spoken language service from the MRFP with the user's preference indicated (5). The MRFP delivers the spoken language service, e.g., an announcement, in the preferred spoken language (6) and indicates when the announcement is finished (7). The originating AS sends a SIP INVITE message to the S-CSCF with the Accept-Language header and/or P-Media-Language header which forwards it to the terminating domain (8 & 9). The terminating domain is the local or home network of the called party, and the originating domain is the local or home network of the calling party. Because the subscription of the calling party is typically known only in its home network (the originating domain), the stored language preferences are not in that case available in the terminating domain. Once the terminating domain receives the SIP INVITE message, the terminating AS may also provide, if appropriate, the spoken language service, e.g., an announcement, in the preferred spoken language (9). In addition, the call is to a help desk, the terminating AS may send the call to an operator who speaks the requested language.

Figure 7 illustrates a non-limiting example signaling diagram implemented in a SIP-based system like that of Figure 5 in accordance with a variation of the third example embodiment. The calling user A sends a SIP INVITE message with an Accept-Language header and/or P-Media-Language header to the S-CSCF (1) which forwards it to the terminating AS (2). The S-CSCF orders a spoken language service from the MRFP with the user's spoken language preference indicated (3). The MRFP delivers the spoken language service, e.g., an announcement, in the preferred spoken language (4) and indicates when the announcement is finished (5). The terminating AS sends a SIP INVITE message with the Accept-Language header and/or P-Media-Language header to the S-CSCF (6) which forwards it to the called user-B to see if user-B accepts the call (7). If the called user-B is a machine, it can generate voice prompts or menus in the requested language.

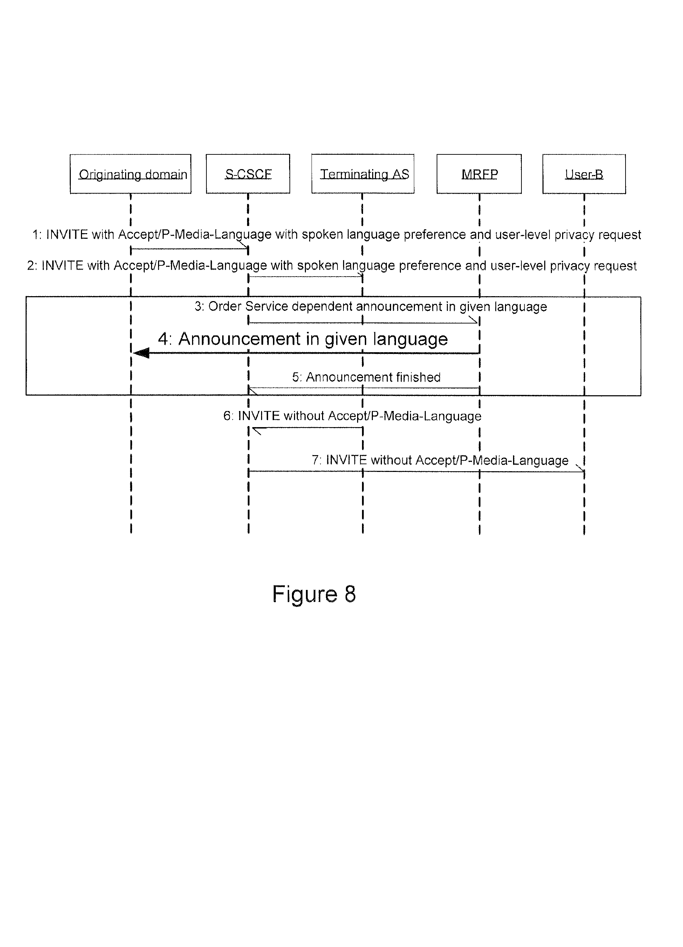

Figure 8 illustrates a non-limiting example signaling diagram implemented in a SIP-based system like that of Figure 5 in accordance with a fourth example embodiment. The calling user A sends a SIP INVITE message with an Accept-Language header and/or P-Media-Language header and a user-level privacy request to the S-CSCF (1) which forwards it to the terminating AS (2). The S-CSCF orders a spoken language service from the MRFP with the user's preference indicated (3). The MRFP delivers the spoken language service, e.g., an announcement, in the preferred spoken language (4) and indicates to the S-CSCF when the announcement is finished (5). Having detected the privacy request, the terminating AS removes the Accept-Language header and/or P-Media-Language header and sends a SIP INVITE message to the S-CSCF without the Accept-Language header and/or P-Media-Language header (6). The S-CSCF forwards the stripped INVITE message to the called user-B to see if user-B accepts the call.

The technology described in this application offers several advantages including in different embodiments: advanced spoken-language dependent telecommunication and IMS services to the user independent of the capabilities of the user's terminal from the originating domain, advanced spoken-language dependent telecommunication and IMS services to the user independent of the capabilities of the user's terminal from the terminating domain, and advanced spoken-language dependent telecommunication and IMS services to the user independent of the capabilities of the user's terminal without divulging the user's private language preferences to other communication parties.

Although various embodiments have been shown and described in detail, the claims are not limited to any particular embodiment or example. None of the above description should be read as implying that any particular element, step, range, or function is essential such that it must be included in the claims scope. The scope of patented subject matter is defined only by the claims. The extent of legal protection is defined by the words recited in the allowed claims and their equivalents. All structural and functional equivalents to the elements of the above-described preferred embodiment that are known to those of ordinary skill in the art are expressly incorporated herein by reference and are intended to be encompassed by the present claims. Moreover, it is not necessary for a device or method to address each and every problem sought to be solved by the technology described, for it to be encompassed by the present claims. No claim is intended to invoke paragraph 6 of 35 USC §112 unless the words "means for" or "step for" are used. Furthermore, no embodiment, feature, component, or step in this specification is intended to be dedicated to the public regardless of whether the embodiment, feature, component, or step is recited in the claims.

## Claims

1. A method in a communications network server that provides network services to user subscribers, the method comprising:
receiving a Session Initiation Protocol (SIP) message from a calling user;
in response to the received message, determining a preferred spoken language for the calling user that is different than a preferred written language for the calling user; and
initiating a spoken language service that uses the preferred spoken language.

2. The method of claim 1, wherein the preferred spoken language for the user is determined by checking stored user data associated with the calling user.

3. The method of claim 1, wherein the preferred spoken language for the user is determined from content of a field of the received SIP message.

4. The method in claim 3, wherein the SIP message is an INVITE message and the field comprises an existing Accept-Language field.

5. The method in claim 3, wherein the SIP message is an INVITE message and the field comprises a new P-Media-Language field.

6. The method of claim 1, wherein the spoken language service is a voice announcement which is provided using the preferred spoken language for the calling user that is different than a preferred written language for the calling user.

7. The method of claim 1, wherein the network server is an originating application server (AS), and the method further comprises providing another SIP message that includes an Accept-Language field and/or a P-Media-Language field having the preferred spoken language for the calling user to a Call Session Control Function (CSCF) used to process SIP signaling packets in an IP Multimedia Subsystem (IMS) for forwarding to a terminating domain in the IMS.

8. The method of claim 1, wherein the network server is a Call Session Control Function (CSCF) server used to process SIP signaling packets in an IP Multimedia Subsystem (IMS), and wherein the CSCF server forwards the SIP message with an Accept-Language field and/or a P-Media-Language field having the preferred spoken language for the calling user to a called user.

9. The method of claim 1, further comprising:
in response to the received message, determining a user-level privacy request for the preferred spoken language; and
forwarding the received message without an indication of the preferred spoken language for the user.

10. The method of claim 1, wherein the received SIP message is an INVITE message, the preferred spoken language for the user is determined from content of an Accept-Language field and/or a P-Media-Language field of the INVITE message, and the method further comprises:
in response to the INVITE message, determining a user-level privacy request for the preferred spoken language from content of the Accept Language field and/or a P-Media-Language field; and
forwarding the received INVITE message without the Accept-Language field and/or a P-Media-Language field.

11. An apparatus for use in a communications network server that provides network services to user subscribers, the apparatus comprising:
an input and output for receiving and sending Session Initiation Protocol (SIP) messages, and
electronic circuitry configured to:
receive from the input a Session Initiation Protocol (SIP) message from a calling user;
in response to the received message, determine a preferred spoken language for the calling user that is different than a preferred written language for the calling user; and
initiate via the output a spoken language service that uses the preferred spoken language.

12. The apparatus of claim 11, wherein the electronic circuitry is configured to determine the preferred spoken language for the user by checking data stored in a database user that is associated with the calling user.

13. The apparatus of claim 11, wherein the electronic circuitry is configured to determine the preferred spoken language for the user from content of a field of the received SIP message.

14. The apparatus in claim 13, wherein the SIP message is an INVITE message and the field comprises an Accept-Language field.

15. The apparatus in claim 13, wherein the SIP message is an INVITE message and the field comprises a P-Media-Language field.

16. The apparatus of claim 11, wherein the spoken language service is a voice announcement provided using the preferred spoken language for the calling user that is different than a preferred written language for the calling user.

17. The apparatus of claim 11, wherein the electronic circuitry is configured to:
in response to the received message, determine a user-level privacy request for the preferred spoken language; and
forward the received message without an indication of the preferred spoken language for the user.

18. The apparatus of claim 11, wherein the received SIP message is an INVITE message, the preferred spoken language for the user is determined from content of an Accept-Language field and/or a P-Media-Language field of the INVITE message, and the electronic circuitry is configured to:
in response to the INVITE message, determine a user-level privacy request for the preferred spoken language from content of the Accept Language field and/or a P-Media-Language field; and
forward the received INVITE message without the Accept-Language field and/or a P-Media-Language field.

19. A communications network server that provides network services to user subscribers, the apparatus comprising:
an input and output for receiving and sending Session Initiation Protocol (SIP) messages, and
electronic circuitry configured to:
receive from the input a Session Initiation Protocol (SIP) message from a calling user;
in response to the received message, determine a preferred spoken language for the calling user that is different than a preferred written language for the calling user; and
initiate via the output a spoken language service that uses the preferred spoken language.

20. The network server in claim 19, wherein the network server is an originating application server (AS), and the electronic circuitry is configured to provide another SIP message that includes an Accept-Language field and/or a P-Media-Language field having the preferred spoken language for the calling user to a Call Session Control Function (CSCF) used to process SIP signaling packets in an IP Multimedia Subsystem (IMS) for forwarding to a terminating domain in the IMS.

21. The network server of claim 19, wherein the network server is a Call Session Control Function (CSCF) server arranged to process SIP signaling packets in an IP Multimedia Subsystem (IMS), and wherein the electronic circuitry is configured to forward the SIP message with an Accept-Language field and/or a P-Media-Language field having the preferred spoken language for the calling user to a called user.
